# EUROPEAN PATENT APPLICATION

(11) **EP 2 039 234 A1**
(43) Date of publication of application: **25.03.2009**
(21) Application number: 08164790.1
(22) Date of filing: 22.09.2008
(51) Int. Cl.: A01D 34/535, A01F 29/20

(54) **Flail device and method for coupling and uncoupling a flail**

(30) Priority: 21.09.2007 NL 2000872
(71) Applicant: Votex B.V., 6666 LP Heteren (NL)
(72) Inventor: Nooijen, Hubertus Johannes Maria, 5856 AG, Ledeacker (NL)
(74) Representative: Van den Heuvel, Henricus Theodorus

(57) **Abstract**

Flail device (100) provided with flails (150), comprising a flail shaft (110), holders (115) connected to the periphery of the flail shaft, each adapted to hold a clevis shaft (130) parallel to the flail shaft, clevises (140,145) rotatable about the clevis shafts, flails coupled pivotally to the clevises, wherein the at least one mutual release position of a clevis and a flail requires a specific relative positioning of at least a part of a clevis; the flail; and at least one other component of the flail device.

## Description

The present invention relates to a flail device as according to the preamble of claim 1 and to a method for coupling and uncoupling a flail.

Flail devices are known and generally comprise a flail shaft, to the periphery of which are connected holders adapted to hold a plurality of shafts which are parallel to the flail shaft and to which clevises are rotatably connected, which clevises carry flails coupled pivotally to the clevises. During rotation of the flail shaft at high speed such flail devices are used to mow and/or shred crops. As a result of use there occurs wear of the clevises and, to even greater extent, of the flails. After a time the flails must therefore be replaced, as must (less frequently) the clevises.

The known flail devices have the drawback that replacement of the clevises and the flails is time-consuming, particularly as the clevises are fastened to the holders using bolts and nuts, and a flail device is provided with a relatively large number of flails, for instance about sixty flails per flail device. Unfastening the bolts and nuts from the flails and clevises is already a great deal of work per se, and this is further made more difficult by dirt which has adhered during use and corrosion and damage which has occurred. In practice, the nut/bolt connections are therefore often ground away.

The British patent GB 2 359 723 therefore provides a method for the mounting flails, wherein a clevis and a flail can be uncoupled in one mutual release position, for which purpose the flails and clevises used are provided with recesses. In a release position - a predetermined position in which the flail and the clevis are in a relative position - the flail can hereby be released from the clevis without tools.

It is however an object of the present invention to provide a flail device and a method for coupling and uncoupling a flail which at least partly obviate the known drawbacks of the prior art without the per se already vulnerable, wearing parts of the device here having to be provided with recesses, and thus weakened portions. It is a further object of the present invention to provide a flail device and a method for coupling and uncoupling a flail, wherein the chance of unintended release of flails and/or clevises is at least further reduced.

The invention provides for this purpose a flail device as according to the preamble of claim 1, characterized in that the at least one mutual release position comprises a predetermined relative position of at least a part of a clevis (respectively a clevis part), the flail and at least one further component of the flail device. Because the release position requires a specific relative position of three components of the device, or requires at least the movement of components in at least three different directions, the chance of unintentional release of a flail is reduced considerably compared to the prior art. The wear of the device, in particular the wear of clevises and/or flails, is also less than in embodiments in which the recess is provided therein.

In an advantageous embodiment the holder is provided with a recess which is dimensioned such that at least a part of the flail can be received therein, for the purpose of facilitating the at least one release position, in which the clevis and the flail can be uncoupled, only if the flail is at least partly received in the recess. The thus proposed flail device provides various advantages. Not only can the flail be released in simple manner without time-consuming operations and the use of tools being required for the purpose, the disadvantageous recesses in the flail, which weaken the flail, are also unnecessary. This makes it possible, among other things, to apply the existing flails in advantageous manner in the flail device according to the invention without these flails requiring any modification.

The clevis can here consist of one part, although in an advantageous embodiment the flail device is characterized in that a clevis comprises two clevis parts which can be translated parallel to the clevis shaft, wherein the relative translation of the clevis parts is locked form-fittingly only in the coupled situation of a flail and the clevis parts. Because no separate means are required in this embodiment for the purpose of locking the coupling between the clevis parts and the flail, the traditional locking means in the form of bolt/nut connections are unnecessary. Not only does this make the construction simpler and enable it to be embodied with fewer components than the prior art flail devices; the release of the (assembled) clevis is also considerably simplified. This is because in order to release the clevis it now suffices to place the flail in a non-locking position; for instance by removing it from the clevis. Once the locking action of the flail has ceased, the clevis parts can be moved apart (be translated), whereby they detach from the holders without further operations being required. The labour-intensive operations for loosening the corroded and/or contaminated nut/bolt connections thus become unnecessary. The proposed construction can also take a very operationally reliable form.

In an embodiment the holder comprises a releasable element, which element comprises the recess. The invention can thus also be applied to existing flail shafts.

In a further embodiment a first part of a clevis is rotatable about an associated clevis shaft on a first side of the holder and a second part of the clevis is rotatable about the associated clevis shaft on a second side of the holder. Because both parts are thus placed on either side of the holder, they can then, and only then, be removed from the clevis shaft in the at least one release position in which the flail is at least partly received in the recess, whereby the locking action of the two clevis parts has ceased. In this unlocked situation the clevis, as well as the flail, is also simple to replace without a screw and bolt construction or other coupling requiring a special tool having to be unfastened for this purpose. The maintenance of the flail device is hereby simplified considerably. Another advantage of the mutually displaceable clevis parts is that not only does the flail have to be placed in a specific position for uncoupling purposes; a relative rotation of the clevis parts can also be employed as a necessary condition for uncoupling. When the locking is arranged (in that the clevis parts are coupled to the flail and the flail is not in the release position), the clevis is also locked parallel to the longitudinal direction of the clevis shaft relative to the holder since the two clevis parts are locked and connected rotatably to the clevis shaft on either side of the holder. This results in an extra-secure coupled position. In such a preferred variant an uncoupling of clevis and/or flail can only be allowed after performing multiple displacements of components; this effect can be compared to a "childproof" closure. The chance of clevis and/or flail uncoupling at an undesirable moment is thus further reduced, so that release under normal operating conditions is practically impossible.

In yet another preferred embodiment a coupling between a clevis and a flail comprises an eye and at least one hook, wherein the coupling of the at least one hook and the eye can only be modified in the at least one release position. Modifying of the coupling is understood to mean effecting a coupling and also undoing an already present coupling.

Use is in this way made of a simple and robust construction, wherein existing types of flail can be used.

The clevis can here comprise a first hook on the first clevis part and a second hook on the second clevis part, wherein the flail comprises the eye and wherein the eye mutually locks the first and second hook in form-fitting manner, at least in a direction parallel to the direction of the clevis shaft. In this way a locking of the clevis relative to the holder is realized using an existing flail type.

The first hook can advantageously be placed through the eye in a first rotation direction and the second hook can be placed in the eye in a second rotation direction opposite to the first rotation direction, wherein the recess is arranged in the holder such that in the at least one position the flail limits a free angle of rotation of at least one hook such that it cannot be removed from the eye. An extra safeguard is thus provided against unintentional release of the flail during use, since in order to remove the flail the flail must now be placed in the release position, after which the first hook of the first clevis part must be removed from the eye and the flail together with the second clevis part then removed from the clevis shaft or the second clevis part with the clevis shaft removed from the carrier eye.

A further advantage can be achieved when the holder comprises at least one passage opening for receiving the clevis shaft. The holder can here comprise one or more eye parts which are welded onto the flail shaft and through which the shaft can be placed. It is also possible for the flail shaft to be provided with at least one, optionally separate, ring in which a recess is provided for passage of the clevis shaft. This latter embodiment is attractive precisely when an existing flail device with traditional holders is converted into a flail device according to the present invention or is adapted to perform the method according to the present invention. The additional ring then forms the element with which the flail is held in a locked position in circumstances other than when the flail is placed partially into the recess in the ring.

It is further an advantage from the maintenance viewpoint if the passage opening in the holder for the clevis shaft has a non-rotation-symmetrical section perpendicularly of the clevis shaft, and the clevis shaft fits form-fittingly into the passage opening in rotation direction. This can for instance be realized with a clevis shaft provided with at least one projection which is placed in a correspondingly formed passage opening. It is also possible for the clevis shaft to be provided for instance with at least one flattened side and once again a correspondingly formed passage opening. Owing to the form-fitting co-action of clevis shaft and passage opening the clevis shaft cannot rotate in the passage opening, whereby hardly any wear occurs between clevis shaft and passage opening. This is particularly very important for the holder since it thus no longer forms a wearing part. It is precisely the holder which is difficult to replace. Wear of the clevis shaft can be dealt with by replacing the clevis shaft.

In order to lock the clevis shaft axially relative to the clevis it is advantageous if the clevis shaft comprises a thickened portion at the position of the passage through the holder. The clevis shaft can hereby not be released in the mounted situation from clevis parts locked relative to each other; the clevis parts then lock the clevis shaft relative to the holder.

The flail device can more particularly be adapted such that the clevis shaft is provided with a spacer, such as a protrusion or thickened portion, which can for instance form part of a possibly present thickened portion of the clevis shaft, for the purpose of holding the clevis at a distance from an associated holder. Contact between the clevis and the holder can hereby be minimized, which prevents wear of the holder as a result of movement of the clevis. The clevis shaft is thus the wearing part, and it is precisely the clevis shaft which can be given a replaceable form much more easily than the holder. This measure also simplifies maintenance of the flail device.

The invention will be further elucidated hereinbelow on the basis of the following non-limitative exemplary embodiments, in which identical reference numerals refer to similar components. Herein:
figure 1 shows an exploded view of a first embodiment variant of a flail device according to the present invention;
figure 2 shows an exploded view of a second embodiment variant of a flail device according to the present invention;
figure 3 is a perspective detail view of the first embodiment variant of the flail device as shown in figure 1, wherein the flail is in the release position;
figure 4 is a perspective detail view of the flail device as shown in figure 3, wherein the flail is in an operative, i.e. non-released, position;
figure 5 shows a perspective view of a further embodiment variant of a flail device according to the present invention;
figure 6 shows a perspective view of yet another embodiment variant of a flail device according to the present invention; and
figure 7 shows a perspective view of the embodiment variant of figure 6 from a different perspective than in figure 6.

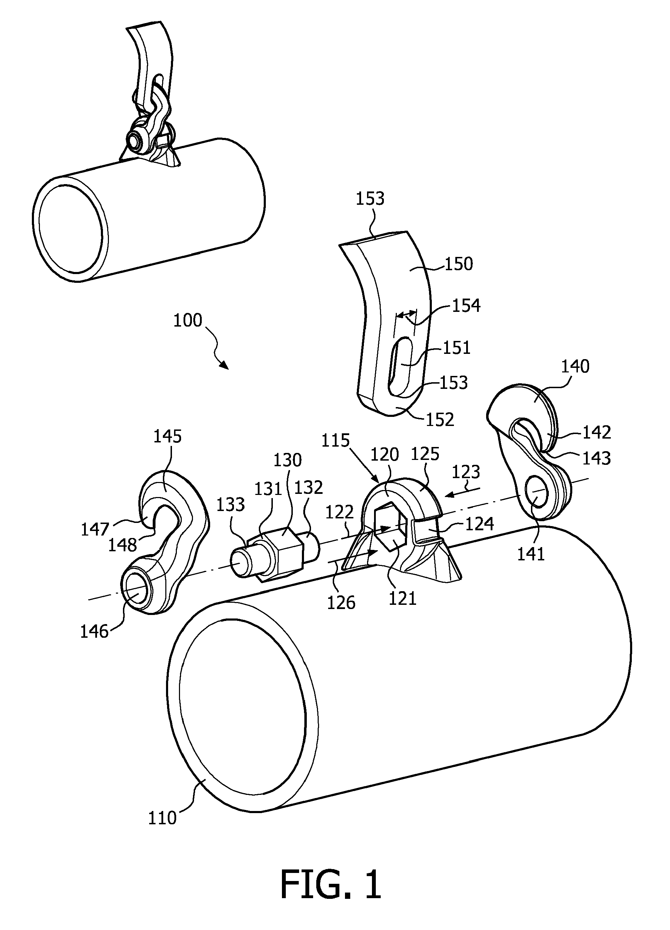

Figure 1 shows an exploded view of a first embodiment of a flail device 100 according to the present invention. Device 100 is provided with a flail shaft 110 to which is fixed a holder 115. Holder 115 consists of an eye part 120 provided with a central opening 121. A clevis shaft 130 can be arranged in opening 121 by moving clevis shaft 130 in the direction of arrow 122. Clevis shaft 130 is provided with a thickened part 131 which is mounted non-rotatably through placing in opening 121. This is a result of the design of opening 121 and thickened part 131 of clevis shaft 130 in a plane of section perpendicularly of the axial direction; opening 121 and thickened part 131 are non-rotation-symmetrical. It is hereby not possible for clevis shaft 130 to rotate in eye part 120. Clevis shaft 130 is also provided with a first shaft pin 132 and a second shaft pin 133, wherein the first shaft pin 132 is situated on a first side 123 of eye part 120 after placing of clevis shaft 130 in opening 121 of holder 115 and a second shaft pin 133 is situated on a second side 124 of eye part 120 after placing of clevis shaft 130 in opening 121 of holder 115.

Also shown is a clevis consisting of two clevis parts 140, 145; a first clevis part 140 and a second clevis part 145. The first clevis part 140 is provided with an opening 141 adapted for rotatable co-action with shaft pin 132 of clevis shaft 130. The second clevis part 145 is provided with an opening 146 adapted for rotatable coupling to shaft pin 133 of clevis shaft 130. If they are thus connected to clevis shaft 130, clevis parts 140, 141 are placed on either side of eye part 120. In this situation placed on mutually remote sides of eye part 120 - because thickened part 131 of clevis shaft 130 cannot pass through openings 141 and 146 - they hold clevis shaft 130 enclosed in eye part 120.

The first clevis part 140 is provided with first coupling means 142 formed by hook 142 and the second clevis part 145 is provided with second coupling means 147 formed by hook 147, which are adapted to engage together on an eye 151 of a flail 150. On the side remote from eye 151 this flail 150 is provided with a cutting edge 153. Eye 151 in flail 150 is dimensioned such that hooks 142, 147 can just pass therethrough together when flail 150 is placed with side 152 partially in a recess 124 arranged for this purpose in holder 115. When flail 150 is taken out of opening 124 after coupling to clevis parts 140, 145, clevis parts 140, 145 can no longer be moved through opening 151. The underside 153 of opening 151 in flail 150 impedes the passage of ends 142 and 148. As soon as flail 150 is further displaced such that side 152 of flail 151 adjoins an outer surface 125 of eye part 120, the release of clevis parts 140, 145 and the flail are also additionally prevented.

Because the width 154 of opening 151 in the flail is only to a limited extent greater than the combined width of hooks 142, 147, clevis parts 140, 145 are locked form-fittingly in axial direction (see arrow 122) so that they cannot be removed from clevis shaft 130. " To a limited extent greater" is here understood to mean that the width 154 of eye 151 in flail 150' is smaller than three times the width of one of the hooks 142, 147. Flail 150 and clevis parts 140, 145 are hereby mutually locked when the flail is not in the release position at which flail 150 is placed partially in opening 124. Clevis parts 140, 145 are simultaneously then also locked with eye part 120 and clevis shaft 130.

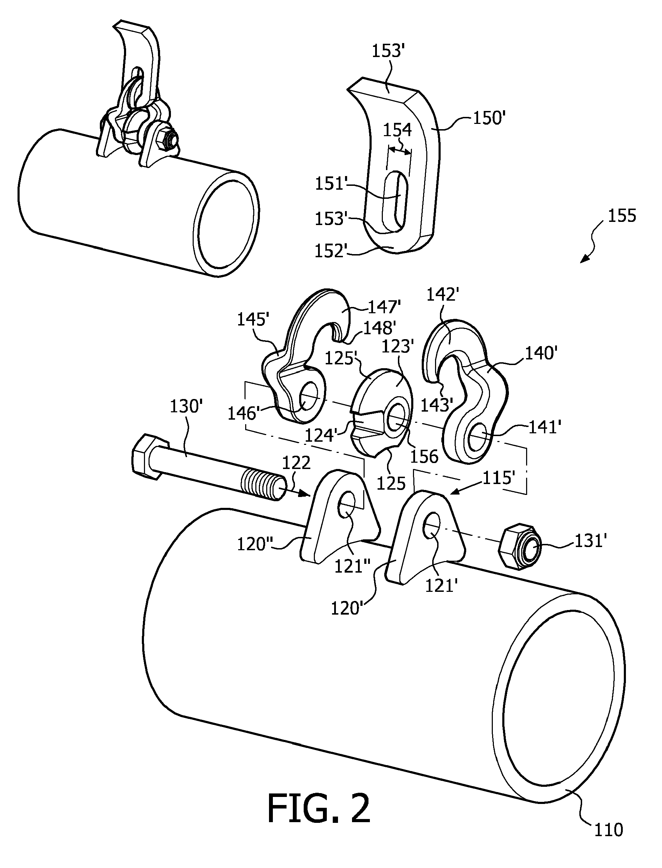

Figure 2 shows an exploded view of a second embodiment variant of a flail device 155 according to the present invention. This second embodiment variant shows a flail shaft 110' of a prior art flail device (not shown) which is modified in the manner shown below to form a flail device 155 according to the invention.

Flail device 155 comprises a flail shaft 110' to which is fixed a holder 115' formed by eye parts 120', 120", in which respective passage openings 121', 121" have been left clear. Clevis shaft 130' (see arrow 122) can be received by axial displacement in openings 121', 121", which clevis shaft 130' is formed by a bolt 130' which can be locked relative to eye parts 120' and 120" with a nut 131'. Such a construction of a holder 115' and clevis shaft 130' is usual in the prior art. Many of the existing flail devices are therefore provided with such a holder 115' and clevis shaft 130'.

Flail device 155 is further provided with a clevis which is formed by two clevis parts 140', 145'. A first clevis part 140' is provided with an opening 141' and a second clevis part 145' is provided with an opening 146', both for rotatable engagement on clevis shaft 130'.

A ring 123' is also placed in holder 115', in which ring 123' a central passage opening 156 is left clear for receiving clevis shaft 130'. Ring 123' is provided on its periphery with a recess 124' for partially receiving a flail 150'. When clevis shaft 130' protrudes through openings 121', 121" and 156, a notch 125 of ring 123' connects precisely onto the periphery of flail shaft 110, so that ring 123' cannot be rotated around clevis shaft 130'. Recess 124' in ring 123' is thus also locked at a fixed location.

The first clevis part 140' and second clevis part 145' are provided with coupling means formed respectively by hook 142' and hook 147'. These hooks 142', 147' are adapted to engage on an eye 151' in flail 150'. Flail 150' is also provided with a cutting edge 153'. Eye 151' in flail 150' is dimensioned such that hooks 142', 147' can just pass therethrough when flail 150' is placed with a side 152' in recess 124'. When flail 150' is removed with side 152' from opening 124' after coupling to clevis parts 140', 145', an underside 153' of eye 151' in flail 150' prevents outer ends 143', 148' of hooks 142', 147' from being moved through eye 151'. The coupling of flail 150' to clevis parts 140', 145' is thus secured.

Because the width 154 of eye 151' is only to a limited extent greater than the combined width of hooks 142', 147', clevis parts 140' and 145' are locked form-fittingly in axial direction (see arrow 122) so that they cannot be removed from clevis shaft 130'. "To a limited extent greater" is here understood to mean that the width 154 of eye 151' in flail 150' is smaller than three times the width of one of the hooks 142', 147'. Flail 150' and clevis parts 140', 145' are hereby mutually locked when flail 150' is not in the release position, in which side 152' of flail 150' is located in opening 124'. When an existing flail shaft 110' is used, the advantage is thus also provided of being able to replace flails 150' in simple manner and without tools.

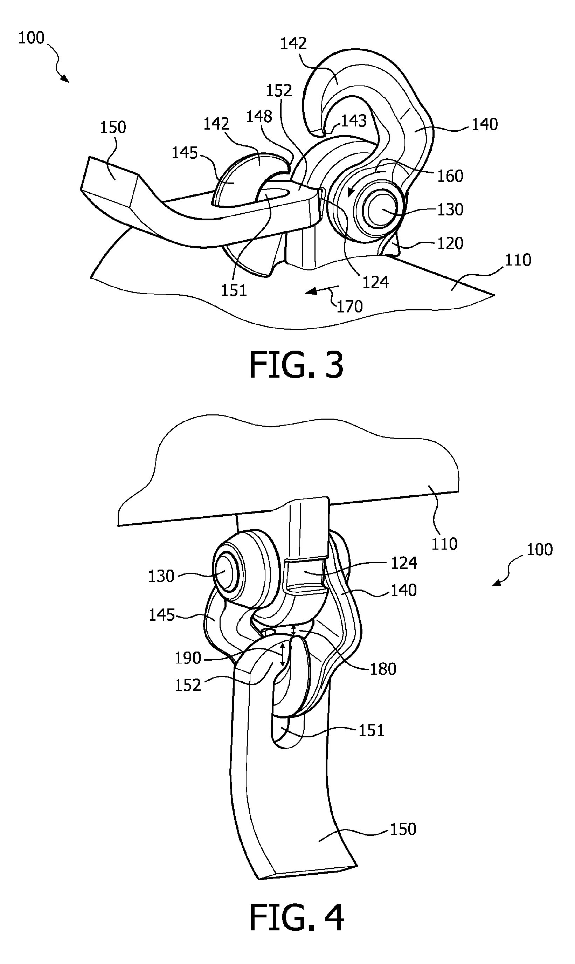

Figure 3 shows a perspective detail view of a part of flail device 100 of figure 1, wherein flail 150 is in the release position. Side 152 of flail 150 is here placed in recess 124 of eye part 120. Clevis part 140 hereby has sufficient space to rotate around clevis shaft 130 in the direction as shown by arrow 160. It is possible here that hook 142 of clevis 140 can be displaced through eye 151 in flail 150. When clevis part 140 is removed, clevis part 145 can be removed from the non-visible side of clevis shaft 130, wherein hook 147 of clevis part 145 is taken out of eye 151 of flail 150, or wherein clevis part 145 is removed from clevis shaft 130 together with flail 150. When clevis part 140 is placed through opening 151 and flail 150 is subsequently moved from the release position in the direction of arrow 170, clevis parts 140, 145 can no longer be taken out of eye 151 of flail 150 as long as flail 150 does not return to the release position.

Figure 4 shows a perspective detail view of flail device 100 of figures 1 and 3 wherein flail 150 is in an operative, non-released position. It can be seen that the free stroke which flail 150 can make in the direction radially of flail shaft 110 (see arrow 180) is smaller than the distance 190 which must be covered in order to take hooks 142, 147 out of eye 151. The coupling between flail 150 and clevis parts 140, 145 is thus locked as long as flail 150 is not placed partially in opening 124. During normal use of flail device 100 the release position is however not reached since flail 150 is urged by the occurring centrifugal force precisely into a position in which it extends in a direction radially of the periphery of flail shaft 110. Even if side 152 of flail 150 were situated opposite opening 124, a force would still have to be exerted on flail 150 in order to place it in opening 124. The chance of undesirable release of flails 150 during operation is thus practically zero.

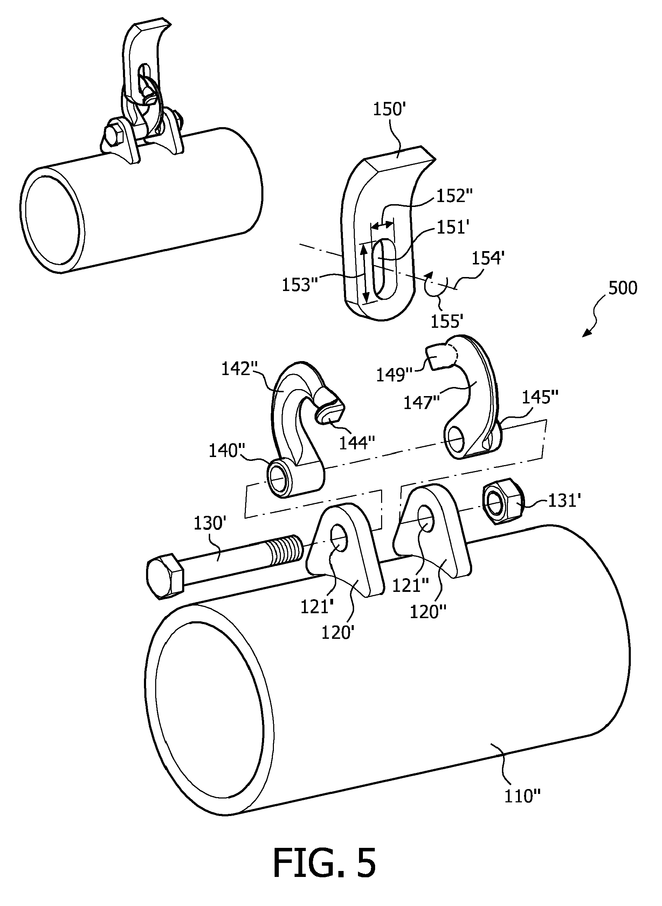

Figure 5 shows a further embodiment variant of the flail device according to the present invention. This embodiment variant shows a flail shaft 110" of a prior art flail device (not shown) which is modified into a flail device 500 according to the invention. Flail shaft 110" is provided with a holder comprising a first eye part 120' with an opening 121' and a second eye part 120" with an opening 121". Openings 121' and 121" are adapted to receive clevis shaft 130' formed by a bolt which can be locked using a nut 131'. The first and second clevis part 145", 140" respectively can be arranged on clevis shaft 130'. The first clevis part 140" comprises a hook 142" with a lug 144" extending at a right angle to hook 142" and the second clevis part 145" comprises a hook 147" with a lug 149" extending at a right angle to hook 142". Hooks 142", 147" and lugs 144", 149" are designed such that the combined width of hook 142" and lug 149" as well as the combined width of hook 147" and lug 144" is together greater than the width 152" of opening 151' of flail 150', but smaller than or equal to the height 153" of opening 151' of flail 150'. When rotated 90 degrees around rotation axis 154', flail 150' can thus be uncoupled from clevis parts 140", 145" by taking the two hooks 142", 147" out of eye 151' of flail 150' after rotation of flail 150'. In addition to the embodiment shown in figure 5, embodiments are possible in which lugs 144", 149" are placed at an angle other than 180 degrees relative to each other in order to reduce still further the chance of unintended release of flail 150'.

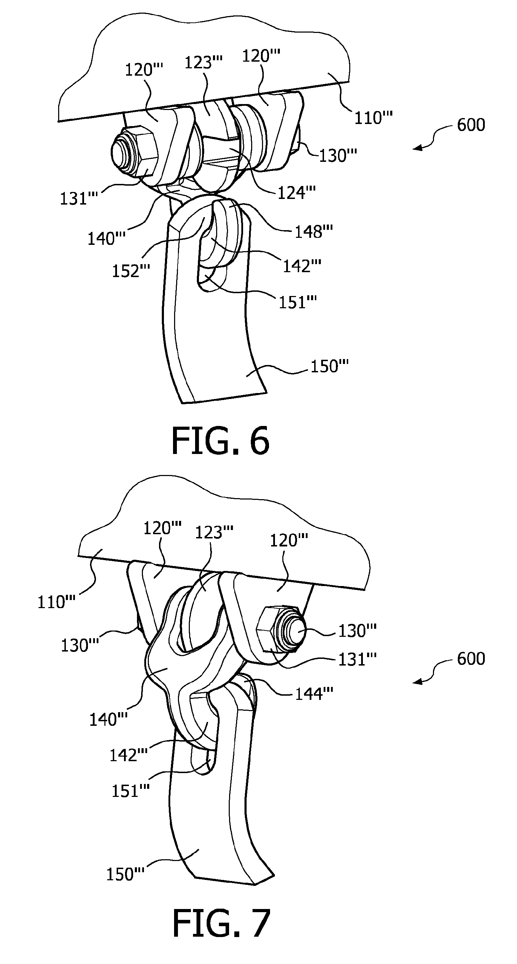

Figure 6 shows a detail of yet another embodiment variant of a flail device 600 according to the present invention. The shown flail shaft 110''' of a prior art flail device (not shown) is modified into a flail device 600 according to the invention. Flail shaft 110''' is provided with a holder with a first and a second eye part 120''', 120''' respectively. Eye parts 120''' are adapted to receive clevis shaft 130"'. Clevis shaft 130''' consists of a bolt with locking nut 131 "'. Clevis 140''' engages on clevis shaft 130"'. Clevis 140''' comprises a hook 142''' with an end 148''' which prevents release of flail 150''' from clevis 140''' when end 152''' of flail 150''' is not situated in recesses 124''' of ring 123"'. Ring 123''' forms part of the holder.

Figure 7 shows the embodiment variant of a flail device 600 of figure 6 of the present invention from a different perspective. For a description of the individual components reference is made to the figure description associated with figure 6.

## Claims

1. Flail device provided with flails, comprising:
- a flail shaft;
- holders connected to the periphery of the flail shaft, each adapted to hold a clevis shaft parallel to the flail shaft;
- clevises rotatable about the clevis shafts;
- flails coupled pivotally to the clevises;
wherein
- a clevis and a flail can be uncoupled in at least one mutual release position, **characterized in that** the at least one mutual release position of a clevis and a flail requires a specific relative positioning of
- at least a part of a clevis;
- the flail; and
- at least one other component of the flail device.

2. Flail device as claimed in claim 1, **characterized in that** the at least one further component comprises a holder, wherein the holder is provided with a recess which is dimensioned such that at least a part of the flail can be received therein, for the purpose of facilitating the at least one release position, in which the clevis and the flail can be uncoupled, only if the flail is at least partly received in the recess.

3. Flail device as claimed in claim 2, **characterized in that** the holder comprises a releasable element, which element comprises the recess.

4. Flail device as claimed in claim 3, **characterized in that** a clevis comprises two clevis parts which can be translated parallel to the clevis shaft, wherein the relative translation of the clevis parts is locked form-fittingly only in the coupled situation of a flail and the clevis parts.

5. Flail device as claimed in claim 4, **characterized in that**
- a first part of a clevis is rotatable about an associated clevis shaft on a first side of the holder, and
- a second part of the clevis is rotatable about the associated clevis shaft on a second side of the holder.

6. Flail device as claimed in any of the foregoing claims, **characterized in that** a coupling between a clevis and a flail comprises an eye and at least one hook, wherein the coupling of the at least one hook and the eye can only be modified in the at least one release position.

7. Flail device as claimed in claim 6, wherein the clevis comprises two clevis parts which can be translated parallel to the clevis shaft, **characterized in that**
- the clevis comprises a first hook on the first clevis part, and
- comprises a second hook on the second clevis part; and
- the flail comprises the eye,
wherein the eye mutually locks the first and second hook in form-fitting manner, at least in a direction parallel to the direction of the clevis shaft

8. Flail device as claimed in claim 7, **characterized in that**
- the first hook can be placed through the eye in a first rotation direction, and
- the second hook can be placed in the eye in a second rotation direction opposite to the first rotation direction,
wherein
- the recess is arranged in the holder such that in the at least one position the flail limits a free angle of rotation of at least one hook such that it cannot be removed from the eye.

9. Flail device as claimed in any of the foregoing claims, **characterized in that a** holder comprises at least one passage opening for receiving a clevis shaft.

10. Flail device as claimed in claim 9, **characterized in that** the passage opening in the holder for the clevis shaft has a non-rotation-symmetrical section perpendicularly of the clevis shaft, and the clevis shaft fits form-fittingly into the passage opening in rotation direction.

11. Flail device as claimed in any of the foregoing claims, **characterized in that** a clevis shaft is provided with a spacer for the purpose of holding a clevis at a distance from an associated holder.

12. Flail device as claimed in claim 1, **characterized in that** the clevis comprises a first clevis part and at least a second clevis part, wherein the at least one further component comprises the second clevis part.

13. Flail device as claimed in claim 12, **characterized in that** a coupling between a clevis and a flail comprises an eye and at least one hook, wherein the coupling of the at least one hook and the eye can only be modified in the at least one release position.

14. Flail device as claimed in claim 13, **characterized in that** the coupling between the clevis and the flail comprises two hooks, wherein the coupling of the second hook and the eye can only be modified in a second release position differing from the first release position.

15. Flail, evidently intended for use with a flail shaft as claimed in any of the claims 1-14.

16. Clevis, evidently intended for use with a flail shaft as claimed in any of the claims 1-14.

17. Method for coupling a flail to a flail shaft as claimed in any of the claims 1-14, comprising of:
- carrying a flail into the release position;
- coupling a clevis to the flail; and
- locking the coupling of a clevis to the flail by placing the flail out of the release position.

18. Method as claimed in claim 17, **characterized by**:
- placing a first clevis part on a clevis shaft prior to coupling;
- between coupling of the clevis part to the flail and locking of the coupling:
○ placing a second clevis part on the clevis shaft; and
○ coupling the second clevis part to the flail.

19. Method as claimed in claim 18, **characterized by** placing a clevis shaft in the opening of the holder.

20. Method for uncoupling a flail on a flail shaft as claimed in any of the claims 1-14, comprising of:
- carrying a flail into the release position; and
- uncoupling a clevis with the flail.
